# FASCICULE DE BREVET EUROPEEN

(11) **EP 0 486 414 B1**
(45) Date de publication et mention de la délivrance du brevet: **14.06.1995**
(21) Numéro de dépôt: 91440089.0
(22) Date de dépôt: 08.11.1991
(51) Int. Cl.: A01D 34/66, A01B 73/06

(54) **Machine agricole s'adaptant aisément au relief du terrain et comportant un carter pivotant**
Leicht zur Bodenoberfläche anpassende Landmaschine mit einem schwenkenden Getriebe
Agricultural machine easily following the relief of the ground and having a pivoting gearbox

(30) Priorité: 12.11.1990 FR 9014186
(43) Date de publication de la demande: 20.05.1992
(73) Titulaire: KUHN S.A., F-67700 Saverne (FR)
(72) Inventeur: Wattron, Bernard, F-67700 Haegen (FR); Ermacora, Rino, F-67700 St Jean Saverne (FR)

(56) Documents cités:
- EP-A- 0 073 359
- EP-A- 0 163 587
- EP-A- 0 277 343
- EP-A- 0 297 012
- EP-A- 0 356 358
- DE-A- 3 444 412
- DE-A- 3 710 213
- FR-A- 1 593 947
- FR-A- 2 306 612
- FR-A- 2 608 358
- GB-A- 1 231 659
- US-A- 3 971 446

## Description

La présente invention concerne une machine agricole comportant une structure d'attelage destinée à être liée à l'attelage trois points d'un véhicule moteur et un corps lié à cette structure d'attelage à l'aide d'une première articulation d'axe dirigé vers le haut, le pivotement du corps autour dudit axe étant verrouillé au travail, ledit corps qui s'appuie sur le sol à l'aide d'un support, comporte au moins un organe de travail entraîné au moyen d'un dispositif de transmission de mouvement qui comprend :
- un premier carter lié rigidement à la structure d'attelage et comportant un arbre d'entrée et un premier couple d'engrenages coniques,
- un deuxième carter lié en rotation avec le corps et comportant un arbre de sortie s'étendant en direction du corps et un deuxième couple d'engrenages coniques,
et
- un arbre intermédiaire dont l'axe de rotation est confondu avec l'axe de la première articulation et qui transmet le mouvement du premier carter au deuxième carter.

Par le document FR-A-1 593 947 il est connu une faucheuse comportant un mécanisme de coupe et une structure d'attelage. Cette structure d'attelage est liée à sa partie frontale à l'attelage trois points d'un tracteur. Le mécanisme de coupe, quant à lui, est constitué d'une poutre supportant plusieurs tambours qui tournent chacun autour d'un axe vertical respectif. A son extrémité longitudinale proche du tracteur, la poutre est liée à la structure d'attelage au moyen d'une articulation pivot d'axe vertical qui autorise un pivotement du mécanisme de coupe d'environ 180° par rapport à la structure d'attelage. Ainsi, le mécanisme de coupe peut être pivoté notamment d'une première position de travail qui est à droite du tracteur et dans laquelle son axe longitudinal s'étend perpendiculairement à la direction de travail, jusque dans une deuxième position de travail qui est à gauche du tracteur et dans laquelle son axe longitudinal s'étend également perpendiculairement à la direction de travail. A son autre extrémité longitudinale, la poutre est munie d'un support par l'intermédiaire duquel le mécanisme de coupe s'appuie sur le sol.

L'entraînement en rotation des tambours du mécanisme de coupe s'effectue à partir de l'arbre de prise de force du tracteur qui entraîne par l'intermédiaire d'un arbre à joints de cardans l'arbre d'entrée d'un premier carter lié à la structure d'attelage. Cet arbre d'entrée s'étend dans la direction d'avance du tracteur et transmet le mouvement de rotation à un arbre intermédiaire via un premier couple d'engrenages coniques. L'axe de rotation de cet arbre intermédiaire est confondu avec l'axe vertical de l'articulation pivot liant le mécanisme de coupe à la structure d'attelage. Cet arbre intermédiaire transmet le mouvement de rotation à un arbre de transmission par l'intermédiaire d'un deuxième couple d'engrenages coniques logé à l'intérieur de l'extrémité de la poutre s'étendant entre deux plaques de la structure d'attelage, laquelle extrémité de la poutre constitue ainsi un deuxième carter dont l'arbre de transmission constitue l'arbre de sortie. Ledit arbre de transmission s'étend à l'intérieur de la poutre et entraîne chaque tambour au moyen d'un couple respectif d'engrenages coniques.

Grâce à ce dispositif de transmission de mouvement, le mécanisme de coupe peut être entraîné dans toutes les positions dans lesquelles il peut être pivoté autour de l'axe vertical de l'articulation pivot le liant à la structure d'attelage. Les positions sont définies par une broche collaborant avec une cavité respective prévue sur les plaques de la structure d'attelage. Cette broche est d'ailleurs réalisée sous forme de dispositif de protection qui permet au mécanisme de coupe de basculer vers l'arrière autour de l'axe vertical de l'articulation pivot en cas d'une surcharge excessive.

Les plaques de la structure d'attelage présentent une cavité qui permet de maintenir le mécanisme de coupe dans une position pivotée vers l'arrière de 90° c'est-à-dire environ parallèle à la direction d'avance. C'est cette position qui doit probablement être utilisée pour le transport bien que le document ne semble pas donner de précision à ce sujet. Dans cette position, la faucheuse est donc entièrement portée par l'attelage trois points du tracteur.

L'avantage de ce dispositif de transmission de mouvement à engrenages est double : il permet en principe l'entraînement du mécanisme de coupe dans toutes ses positions (pas de fausses manoeuvres, pas de surcharges sur les organes du dispositif de transmission en cas de fonctionnement du dispositif de protection) et la transmission du mouvement est d'un bon rendement (transmission à engrenages).

Par contre, cette faucheuse rencontre quelques difficultés lorsqu'elle doit passer par-dessus les obstacles que peut présenter le terrain. En effet, comme le mécanisme de coupe est lié à la structure d'attelage par une liaison pivot d'axe vertical et que la structure d'attelage est liée à l'attelage trois points du tracteur, il est quasi impossible au mécanisme de coupe de s'adapter au relief du terrain, ce qui est préjudiciable à la qualité du travail et à la tenue de la faucheuse.

Le transport de cette faucheuse n'est pas non plus aisé étant donné qu'elle est entièrement portée par le tracteur et de surcroît liée rigidement à celui-ci.

Par le document DE-A-34 44 412 il est connu une faucheuse rotative comportant une poutre porteuse intérieure, une poutre porteuse extérieure et un mécanisme de fauche à tambours. La poutre porteuse intérieure présente trois points d'attelage destinés à être liés à l'attelage trois points d'un tracteur. La poutre porteuse extérieure porte à son extrémité extérieure le mécanisme de coupe lequel y est lié au moyen d'une articulation du type pivot d'axe dirigé suivant la direction d'avance au travail. A leurs extrémités adjacentes, la poutre porteuse intérieure et la poutre porteuse extérieure sont liées l'une à l'autre au moyen d'une pièce intermédiaire. Cette pièce intermédiaire est liée à la poutre porteuse intérieure au moyen d'une première articulation du type pivot d'axe vertical et à la poutre porteuse extérieure au moyen d'une deuxième articulation du type pivot d'axe dirigé suivant la direction d'avance au travail. Un dispositif de sécurité maintient le mécanisme de coupe orthogonalement à la direction d'avance au travail, mais autorise son pivotement vers l'arrière autour de l'axe vertical de la première articulation en cas de surcharge. L'axe horizontal de la deuxième articulation, quant à lui, permet de déplacer le mécanisme de coupe dans une position verticale de transport au moyen d'un organe de manoeuvre. Il permet également en combinaison avec l'axe de l'articulation liant le mécanisme de coupe à l'extrémité extérieure de la poutre porteuse extérieure une adaptation dudit mécanisme de coupe au relief du sol.

Entre les deux points d'attelage inférieurs est prévu un carter de renvoi qui est lié rigidement à la poutre porteuse intérieure. Ce carter de renvoi comporte un arbre d'entrée destiné à recevoir le mouvement de rotation de la prise de force du tracteur au moyen d'un arbre de transmission à joints universels (non représenté). Le carter de renvoi comporte également un arbre de sortie dirigé vers le mécanisme de coupe. Un arbre de transmission télescopique à joints universels transmet le mouvement de rotation de l'arbre de sortie du carter de renvoi à l'arbre d'entrée du mécanisme de coupe. La pièce intermédiaire liant la poutre porteuse intérieure à la poutre porteuse extérieure est implantée de telle sorte que l'axe vertical de la première articulation et l'axe horizontal de la deuxième articulation s'étendent essentiellement dans la partie médiane entre l'arbre de sortie du carter de renvoi et l'arbre d'entrée du mécanisme de coupe. Les angles des joints universels de l'arbre de transmission télescopique doivent ainsi rester sensiblement égaux lors du pivotement de la poutre porteuse extérieure et du mécanisme de coupe aussi bien autour de l'axe vertical de la première articulation qu'autour de l'axe horizontal de la deuxième articulation. Une détérioration de l'arbre de transmission télescopique doit ainsi être évitée lors du pivotement du mécanisme de coupe vers l'arrière en cas de fonctionnement du dispositif de sécurité. Par ailleurs, le fauchage de talus très raides doit de ce fait aussi être possible. Il n'est enfin pas nécessaire de débrancher cet arbre lors du pivotement du mécanisme de coupe dans sa position verticale de transport.

Par le document EP-A-0 163 587 il est connu un autre faucheuse comportant un corps et un timon. Le corps s'appuie sur le sol au moyen de deux roues s'étendant chacune à une extrémité longitudinale correspondante dudit corps.

A sa partie frontale, le timon est muni d'un dispositif de liaison et de transmission qui comporte un carter supérieur et un carter inférieur pouvant tourner l'un par rapport à l'autre autour d'un axe dirigé vers le haut (essentiellement vertical). Ce dispositif de liaison et de transmission comporte en sus un cadre lié en rotation au carter inférieur. Ce cadre comporte, à l'extrémité libre de chacune de ses deux branches, une chape par l'intermédiaire de laquelle le cadre est lié à la barre inférieure respective de l'attelage trois points du tracteur. De cette sorte, le cadre est lié audit attelage au moyen d'une articulation d'axe sensiblement horizontal et s'étendant transversalement à la direction d'avance.

A son extrémité arrière, le timon est lié au corps au moyen d'une articulation du type pivot d'axe dirigé vers le haut (essentiellement vertical). Grâce à cette articulation, le timon peut pivoter par rapport au corps pour prendre différentes positions (position de travail, position de transport par exemple).

Le carter inférieur du dispositif de liaison et de transmission supporte un arbre d'entrée qui reçoit le mouvement de rotation de l'arbre de prise de force du tracteur au moyen d'un arbre à joints universels. Le carter supérieur, quant à lui, supporte un arbre de sortie s'étendant en direction du corps.

A l'intérieur du dispositif de liaison et de transmission, l'arbre d'entrée et l'arbre de sortie sont accouplés l'un à l'autre au moyen d'organes de transmission connus de l'homme du métier tel que par exemple un couple d'engrenages coniques dans chaque carter, lesdits couples étant accouplés l'un à l'autre au moyen d'un arbre intermédiaire dont l'axe de rotation coïncide avec l'axe autour duquel peuvent tourner les carters l'un par rapport à l'autre. Le mouvement est ensuite transmis au corps ou plus exactement aux organes actifs qu'il comporte, par l'intermédiaire d'un arbre de transmission préférentiellement logé à l'intérieur du timon et accouplant l'arbre de sortie du dispositif de liaison et de transmission à l'arbre d'entrée d'un carter d'entrée du corps.

La présente invention a pour objectif de créer une machine agricole du type comportant une structure d'attelage destinée à être liée à l'attelage trois points d'un véhicule moteur et un corps lié à cette structure d'attelage à l'aide d'une première articulation d'axe dirigé vers le haut, le pivotement du corps autour dudit axe étant verrouillé au travail, ledit corps qui s'appuie sur le sol à l'aide d'un support, comporte au moins un organe de travail entraîné au moyen d'un dispositif de transmission de mouvement qui comprend :
- un premier carter lié rigidement à la structure d'attelage et comportant un arbre d'entrée et un premier couple d'engrenages coniques,
- un deuxième carter lié en rotation avec le corps et comportant un arbre de sortie s'étendant en direction du corps et un deuxième couple d'engrenages coniques,
et
- un arbre intermédiaire dont l'axe de rotation est confondu avec l'axe de la première articulation et qui transmet le mouvement du premier carter au deuxième carter,
machine agricole qui, tout en conservant les avantages du dispositif de transmission à engrenages à deux carters pivotants, s'adapte bien aux configurations du sol aussi bien au travail qu'au transport, est maniable et peut être facilement transposée de la position de travail dans la position de transport et vice versa.

A cet effet, la machine agricole selon la présente invention est caractérisée en ce que :
a) le support à l'aide duquel le corps s'appuie sur le sol, comporte une roue susceptible de pivoter durant le travail autour d'un axe au moins sensiblement vertical, ce pivotement étant verrouillé pendant le transport ;
b) dans le voisinage de la première articulation, le corps est lié à la structure d'attelage à l'aide d'une deuxième articulation prévue entre le corps et la première articulation et d'axe au moins sensiblement perpendiculaire à l'axe de cette dernière et à l'axe longitudinal dudit corps ;
c) un arbre télescopique à joints universels transmet le mouvement de rotation de l'arbre de sortie du deuxième carter à l'arbre d'entrée d'un carter d'entrée lié au corps.

La machine agricole selon la présente invention s'appuie sur le sol, tant au travail qu'au transport, au moyen d'une roue. L'invention s'adresse donc tout particulièrement aux machines agricoles de largeur de travail importante.

Au travail, son corps s'étend transversalement à la direction d'avance et de surcroît à côté du tracteur auquel elle est attelée. La roue pivote autour de l'axe au moins sensiblement vertical et peut ainsi suivre automatiquement la direction d'avance au travail. La deuxième articulation permet au corps de pivoter autour de son axe afin que ledit corps puisse s'adapter au relief du terrain. L'arbre télescopique à joints universels qui transmet le mouvement de rotation de l'arbre de sortie du deuxième carter à l'arbre d'entrée du carter d'entrée lié au corps, assure la continuité de l'entraînement notamment lorsque le corps pivote par rapport à la structure d'attelage autour de l'axe de la deuxième articulation.

Au transport, le corps de la machine agricole de l'invention s'étend dans le prolongement du tracteur. Le pivotement de la roue est verrouillé, tandis que le corps peut pivoter autour de l'axe de la première articulation pour suivre la trajectoire du tracteur. Dans cette position, le corps peut également pivoter autour de l'axe de la deuxième articulation pour s'adapter au relief du sol sur lequel roule la roue.

Il convient de noter que le dispositif de transmission à deux carters pivotants autorise sans aucune restriction le pivotement du corps autour de l'axe de la première articulation sans que ce pivotement créé de contraintes dans les organes de transmission (couples d'engrenages coniques, arbre intermédiaire, arbre télescopique à joints universels).

Selon une caractéristique supplémentaire de l'invention, la première articulation et la deuxième articulation pourront être formées par un croisillon guidé d'une part dans une chape de la structure d'attelage et d'autre part dans une chape du corps.

Par ailleurs, l'axe de la première articulation et l'axe de la deuxième articulation pourront être concourants.

De plus, il pourra être prévu que l'axe de la première articulation et l'axe de la deuxième articulation s'étendent dans le voisinage du plan de symétrie vertical de la structure d'attelage dirigé suivant la direction d'avance.

Selon une autre caractéristique supplémentaire de l'invention, le pivotement du corps autour de l'axe de la première articulation pour amener le corps au moins dans la position de travail, pourra être réalisé sous l'action d'un organe de manoeuvre. Ce dernier pourra être réalisé sous forme d'un vérin (hydraulique de préférence) à double tige ou équivalent, dont la double tige sera liée à ses extrémités s'étendant au-dehors du cylindre dudit vérin à la structure d'attelage et dont ledit cylindre sera en liaison d'entraînement avec le corps.

Dans une telle solution, la liaison d'entraînement entre ledit cylindre et le corps pourra être réalisée au moyen d'une crémaillère liée audit cylindre et engrénant avec un secteur circulaire denté lié directement ou indirectement en rotation avec le corps et centré sur l'axe de la première articulation.

Avantageusement, le secteur circulaire denté pourra être lié en rotation avec l'une des branches du croisillon, qui forme une partie de la première articulation.

Selon une autre caractéristique supplémentaire de l'invention, l'arbre de sortie du deuxième carter pourra s'étendre au moins sensiblement parallèlement à l'arbre d'entrée du carter d'entrée du corps. De ce fait, l'entraînement de l'arbre d'entrée du corps est au moins sensiblement homocinétique.

De plus, il pourra être prévu que l'arbre de sortie du deuxième carter s'étende au moins sensiblement au même niveau que l'arbre d'entrée du carter d'entrée du corps.

Selon une autre caractéristique particulièrement intéressante de l'invention, le deuxième carter pourra être lié au premier carter au moyen d'une articulation cylindrique dont l'axe sera confondu avec l'axe de la première articulation.

Selon une autre caractéristique supplémentaire de l'invention, le deuxième carter pourra être implanté sous le premier carter.

De même, la rotation du deuxième carter par rapport au premier carter pourra être pilotée par un organe d'orientation lié directement ou indirectement au corps de la machine agricole.

Avantageusement, l'organe d'orientation pourra lier en rotation le secteur circulaire denté et le deuxième carter.

Selon une autre caractéristique supplémentaire de l'invention, la roue pourra être implantée à l'extrémité du corps éloignée de la structure d'attelage.

Il pourra également être prévu que, dans la position de transport, la roue soit au moins sensiblement alignée avec le centre de gravité du corps et l'axe de la première articulation.

Selon une autre caractéristique supplémentaire de l'invention, il pourra être prévu que le corps comporte un châssis qui s'appuie sur le sol au moyen de la roue, et que ledit (lesdits) organe(s) de travail soit (soient) lié(s) audit châssis de sorte à pouvoir se déplacer en hauteur par rapport audit châssis.

Dans une réalisation très intéressante de l'invention, il est prévu que ledit (lesdits) organe(s) de travail comporte(nt) des organes de coupe et, le cas échéant, des organes de traitement du produit coupé.

D'autres caractéristiques de l'invention apparaissent dans la description suivante d'un exemple non limitatif de réalisation de l'invention faite en référence au dessin annexé sur lequel :
- la figure 1 représente une vue de dessus d'une machine agricole selon l'invention liée à un tracteur agricole et placée dans une position de travail ;
- la figure 2 représente une vue arrière de la machine agricole - sans organes de protection - suivant la flèche II définie sur la figure 1 ;
- la figure 3 représente, à une échelle agrandie, une vue de la première et de la deuxième articulation suivant la flèche III définie sur la figure 1 ;
- la figure 4 représente, à une échelle agrandie, une vue du dispositif de transmission de mouvement suivant la flèche IV définie sur la figure 5 : et
- la figure 5 représente une vue de dessus de la machine agricole placée dans la position de transport.

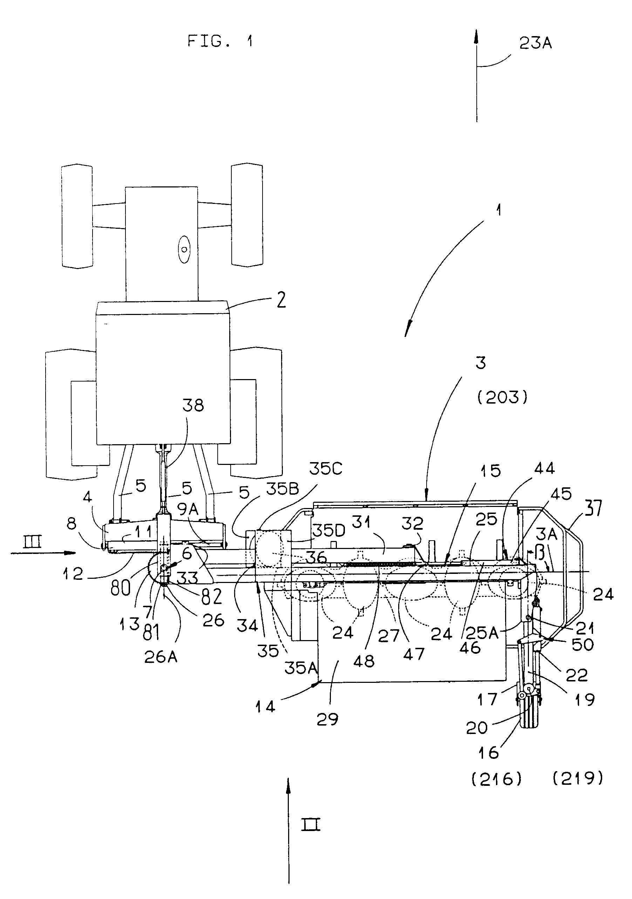

Sur les figures 1 à 5, on voit une machine agricole selon l'invention réalisée sous forme de faucheuse (1). Celle-ci est attelée à un tracteur agricole (2).

La faucheuse (1) se compose d'un corps (3) et d'une structure d'attelage (4). La structure d'attelage (4) est destinée à être liée, à sa partie frontale, à l'attelage trois points (5) du tracteur agricole (2). Le corps (3), quant à lui, est lié à la structure d'attelage (4) au moyen d'un dispositif de liaison (6). Dans cet exemple de réalisation selon l'invention, le dispositif de liaison (6) comporte un croisillon (82) qui est guidé d'une part dans une première chape (80) de la structure d'attelage (4) et d'autre part dans une deuxième chape (81) du corps (3). La première chape (80) s'articule plus précisément aux deux branches (82A, 82B) au moins sensiblement verticales du croisillon (82) pour constituer une première articulation (7) d'axe géométrique (7A) au moins sensiblement vertical. La deuxième chape (81), quant à elle, s'articule aux deux branches (82C, 82D) au moins sensiblement horizontales du croisillon (82) pour constituer une deuxième articulation (26) d'axe géométrique (26A) au moins sensiblement horizontal et au moins sensiblement perpendiculaire à l'axe longitudinal (3A) du corps (3). Un tel agencement permet d'une part au corps (3) de s'adapter au relief du terrain par pivotement du corps (3) autour de l'axe au moins sensiblement horizontal (26A) du dispositif de liaison (6) et autorise d'autre part une modification de la position angulaire du corps (3) par rapport à la structure d'attelage (4) par pivotement du corps (3) autour de l'axe au moins sensiblement vertical (7A) du dispositif de liaison (6). De plus, l'axe au moins sensiblement vertical (7A) et l'axe au moins sensiblement horizontal (26A) du dispositif de liaison (6) sont concourants et s'étendent dans le voisinage du plan de symétrie vertical de la structure d'attelage (4) dirigé suivant la direction d'avance.

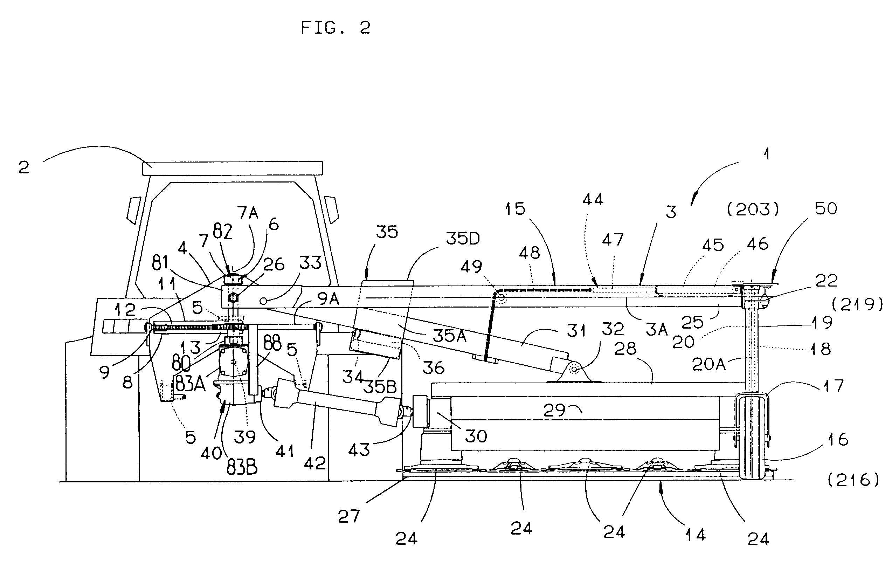

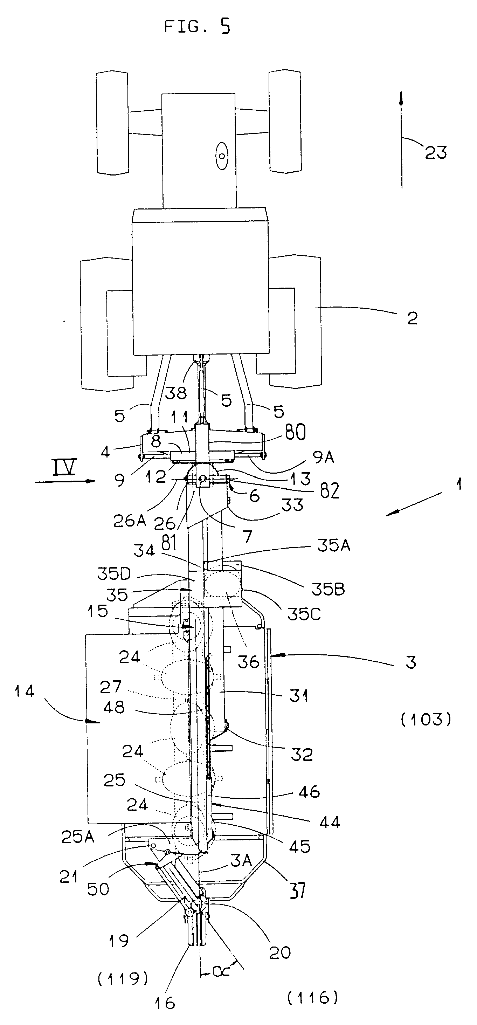

La mise dans la position de travail (203) souhaitée et le maintien dans celle-ci sont réalisés par un vérin de manoeuvre (8) à double tige (9, 9A). Chaque tige (9, 9A) de ce vérin (8) est liée rigidement, à son extrémité respective s'étendant au-dehors du cylindre (11), à la structure d'attelage (4) de sorte à permettre au cylindre (11) dudit vérin (8) de se translater horizontalement sous l'action de l'huile qui l'alimente. Au cylindre (11) est rapportée rigidement une crémaillère (12) qui engrène avec une roue dentée cylindrique (13) laquelle est liée en rotation avec la branche verticale inférieure (82B) du croisillon (82). De ce fait, l'axe de rotation de la roue dentée (13) est confondu avec l'axe au moins sensiblement vertical (7A) du dispositif de liaison (6) et la roue dentée (13) est liée en rotation avec le corps (3) par l'intermédiaire du croisillon (82) et de la deuxième chape (81). Ainsi, le corps (3) peut s'étendre, par pivotement autour de l'axe au moins sensiblement vertical (7A) réalisé respectivement autorisé par le vérin de manoeuvre (8), soit dans une position de travail (203) à côté du tracteur (2) (figures 1 et 2), soit dans une position de transport (103) dans le prolongement du tracteur (2) (figure 5).

Par ailleurs, le corps (3) de la faucheuse (1) comporte un mécanisme de récolte (14) suspendu à un châssis (15). A son extrémité éloignée du dispositif de liaison (6), le châssis (15) s'appuie sur le sol au moyen d'une roue (16) qui roule entre les ailes d'une chape (17).

Sur le dessus de la chape (17) est rapporté rigidement un tourillon (18) dont l'axe longitudinal s'étend vers le haut. Un bras de positionnement (19) en forme de potence creuse, comporte, dans sa partie verticale, le tourillon (18). La liaison du tourillon (18) avec le bras de positionnement (19) est réalisée par une articulation (20) de type pivot dont l'axe géométrique (20A) est au moins sensiblement vertical. A son extrémité longitudinale opposée au tourillon (18), le bras de positionnement (19) est lié au châssis (15) au moyen d'une articulation (21). Celle-ci est aussi de type pivot et son axe géométrique s'étend au moins sensiblement parallèlement à l'axe géométrique (20A) de la précédente liaison pivot (20). De ce fait, la position angulaire du bras de positionnement (19) muni de la roue (16) peut être modifiée en faisant pivoter ledit bras (19) par rapport au châssis (15) autour de l'axe géométrique de l'articulation (21). Ainsi, le bras de positionnement (19) permet à la roue (16) de tourner partiellement autour de l'extrémité du mécanisme de récolte (14) éloignée du tracteur (2) pour placer ladite roue (16) soit dans la position de transport (116) (figure 5), soit dans la position de travail (216) (figure 1), dans lesquelles elle s'étend derrière le centre de gravité du corps (3) compte tenu de la direction d'avance (23 ou 23A) correspondante. C'est-à-dire que dans sa position de transport (119), le bras de positionnement (19) aligne au moins sensiblement la roue (16) avec le centre de gravité du corps (3) et l'axe au moins sensiblement vertical (7A) du dispositif de liaison (6), et que dans sa position de travail (219), le bras de positionnement (19) place la roue (16) derrière les organes de coupe (24) de la faucheuse (1). La mise dans la position souhaitée et le maintien dans celle-ci sont réalisés au moyen d'un vérin de positionnement hydraulique (22) qui s'étend entre le châssis (15) et le bras de positionnement (19).

Sur les figures 1, 2 et 5 apparaît également très précisément la forme du châssis (15). Celui-ci se compose d'une poutre (25) qui s'étend au travail transversalement à la direction d'avance (23A) au travail, et d'une console (25A) qui s'étend parallèlement à ladite direction d'avance (23A) au travail. A l'extrémité longitudinale du châssis (15) dirigée vers le dispositif de liaison (6), la poutre (25) est liée au croisillon (82) au moyen de la deuxième chape (81). A l'autre extrémité longitudinale du châssis (15), la console (25A) est liée rigidement à la poutre (25) et s'étend vers l'arrière par rapport à la direction d'avance (23A) au travail. En sus, la console (25A) du châssis (15) comporte, à son extrémité libre opposée à la poutre (25), l'articulation (21) liant le bras de positionnement (19) au châssis (15). En vue de dessus, un tel agencement permet au bras de positionnement (19), lorsqu'il est dans sa position de transport (119), de former un angle aigu (α) avec l'axe longitudinal (3A) du corps (3), alors que dans sa position de travail (219) le bras de positionnement (19) forme avec ledit axe longitudinal (3A) un angle (β) au moins sensiblement droit.

Comme visible sur les figures 1 et 5, la longueur du corps (3) de la faucheuse (1) est nettement plus grande que sa largeur. Comme de surcroît le corps (3) s'étend au travail à côté du tracteur (2), il est impossible de transporter la faucheuse (1) lorsqu'elle se trouve en position de travail. Il est donc nécessaire de transposer la faucheuse (1), de sorte que la dimension la plus longue de son corps (3) s'étende parallèlement à la direction de transport (23).

Pour placer la machine (1) dans une position de travail, il suffit que le vérin de manoeuvre (8) et le vérin de positionnement (22) placent, puis maintiennent respectivement le corps (3) et le bras de positionnement (19) dans leur position de travail correspondante (203 respectivement 219). La roue (16), comme décrite précédemment, est liée au bras de positionnement (19) au moyen de la liaison pivot (20) d'axe au moins sensiblement vertical (20A) autour duquel la roue (16) peut pivoter de sorte à suivre automatiquement la direction d'avance (23A) durant le travail.

Par contre, lorsque la faucheuse (1) est dans la position de transport (103), le vérin de positionnement (22) maintient le bras de positionnement (19) dans sa position de transport (119), tandis qu'un dispositif de verrouillage (50) dont est muni le bras de positionnement (19), verrouille la roue (16) dans sa position de transport (116) dans laquelle la roue (16) est orientée parallèlement à l'axe longitudinal (3A) du corps (3). De plus, l'action du vérin de manoeuvre (8) est annulée de sorte à permettre au corps (3), lorsque le tracteur (2) avance, de pivoter autour de l'axe au moins sensiblement vertical (7A) du dispositif de liaison (6) pour suivre la trajectoire du tracteur (2).

Le mécanisme de récolte (14), quant à lui, est connu de l'homme de l'art et s'étend sous le châssis (15) dans une direction transversale à la direction d'avance (23A) au travail. Il se compose pour l'essentiel d'une barre de coupe (27) équipée d'organes de coupe (24), d'une structure porteuse (28) (figure 2) à laquelle sont accrochés des organes de traitement (29), et d'un carter d'entrée (30). Le carter d'entrée (30) est lié à l'extrémité longitudinale de la structure porteuse (28) dirigée vers la structure d'attelage (4) et est destiné à entraîner les organes de coupe (24) et les organes de traitement (29). Au-dessus des organes de coupe (24) s'étend, au moins sensiblement parallèlement à la barre de coupe (27), la structure porteuse (28) supportant les organes de traitement (29). Ceux-ci sont placés derrière les organes de coupe (24) en vue du traitement du produit coupé par ces derniers. Du reste, la structure porteuse (28) comporte des organes de protection (37) (figures 1 et 5) qui s'étendent autour de la barre de coupe (27) et qui sont destinés à protéger l'utilisateur ou des personnes se trouvant dans le voisinage.

Un bras de suspension (31) suspend le mécanisme de récolte (14) au châssis (15). Dans cette réalisation, le bras de suspension (31) est agencé au-dessus du mécanisme de récolte (14) et s'étend, en vue de dessus, au moins sensiblement parallèlement à la poutre (25) du châssis (15) et dans le voisinage de cette dernière. A l'une de ses extrémités longitudinales, le bras de suspension (31) est lié à la structure porteuse (28) du mécanisme de récolte (14), dans la partie médiane de celle-ci, au moyen d'une articulation (32) de type pivot. L'axe géométrique de cette articulation (32) s'étend au moins sensiblement dans un plan vertical dirigé suivant la direction d'avance (23A) au travail et contenant le centre des masses du mécanisme de récolte (14). Du reste, ledit axe géométrique est au moins sensiblement dirigé suivant la direction d'avance (23A) au travail. A son autre extrémité longitudinale, le bras de suspension (31) est lié à la poutre (25) du châssis (15) au moyen d'une articulation (33) agencée près de l'articulation (7) d'axe au moins sensiblement vertical (7A) liant le châssis (15) à la structure d'attelage (4). Cette articulation (33) est de type pivot et son axe géométrique est également dirigé au moins sensiblement suivant la direction d'avance (23A) au travail. De ce fait, le bras de suspension (31) autorise uniquement un déplacement du mécanisme de récolte (14) en hauteur ainsi qu'un pivotement dudit mécanisme de récolte (14) par rapport au châssis (15) autour d'une direction au moins sensiblement parallèle à la direction d'avance (23A) au travail. Grâce à ce bras de suspension (31), le mécanisme de récolte (14) peut s'adapter aux configurations du terrain et passer par-dessus les obstacles que peut présenter celui-ci.

Sur les figures 1 et 2, on voit également que le bras de suspension (31) est muni d'un galet (34). Ce dernier est implanté entre les deux articulations (32, 33) du bras de suspension (31) et son axe de rotation coupe au moins sensiblement l'axe géométrique de l'articulation (33) liant le bras de suspension (31) au châssis (15). Le galet (34) s'étend plus précisément entre le bras de suspension (31) et la poutre (25) du châssis (15) de sorte à s'appuyer, par l'intermédiaire d'un support (35) contre ladite poutre (25). Grâce à ce galet (34), l'effort qui s'oppose au glissement du mécanisme de récolte (14) sur le sol, est transmis, en partie au moins, par le galet (34) au châssis (15). De ce fait, le bras de suspension (31) peut suivre les déplacements en hauteur du mécanisme de récolte (14), l'articulation (33) étant soulagée dans n'importe quelle position dudit bras (31).

Dans cet exemple de réalisation, le support (35) est agencé dans le voisinage de la partie médiane du bras de suspension (31) et comporte quatre parties planes (35A, 35B, 35C, 35D) dont la première (35A) est liée à la face latérale antérieure de la poutre (25) du châssis (15) et contre laquelle vient s'appuyer le galet (34). La deuxième partie (35B) de ce support (35) s'étend approximativement parallèlement sous le bras de suspension (31). La troisième partie (35C), quant à elle, s'étend vers le haut devant le bras de suspension (31) par rapport à la direction d'avance (23A) au travail, de sorte à former un "U" avec les parties précédentes (35A, 35B). La quatrième partie (35D), quant à elle, s'étend horizontalement et est liée à la face supérieure de la poutre (25) du châssis (15). De ce fait, lors des déplacements en hauteur du mécanisme de récolte (14), le bras de suspension (31) se déplace à l'intérieur du support (35), pendant que le galet (34) s'appuie contre la première partie (35A) dudit support (35).

Un ressort à gaz (36), dont la structure apparaît sur les figures 1, 2 et 5, est agencé entre le bras de suspension (31) et la deuxième partie (35B) du support (35), qui s'étend sous le bras de suspension (31). De cette façon, le ressort à gaz (36) supporte, par l'intermédiaire du bras de suspension (31), une partie du poids du mécanisme de récolte (14).

Tel que visible sur les figures 1, 2 et 5, la faucheuse (1) comporte encore un dispositif de relevage (44) du mécanisme de récolte (14). Ce dispositif de relevage (44) se compose principalement d'un vérin de relevage (45) dont le cylindre (46) est lié au châssis (15) et dont la tige (47) est liée à une chaîne (48). Cette chaîne (48) s'enroule partiellement sur une roue (49) (figure 2), guidée en rotation dans le châssis (15), et est liée à son extrémité éloignée du vérin de relevage (45) au bras de suspension (31). Au travail, lorsque la tige (47) est sortie, la chaîne (48) est détendue et peut se déformer librement, de sorte que le dispositif de relevage (44) ne gêne pas le déplacement en hauteur du mécanisme de récolte (14) par rapport au châssis (15). Lorsque le mécanisme de récolte (14) doit être relevé, il suffira de faire rentrer la tige (47) dans le cylindre (46) du vérin de relevage (45) en injectant de l'huile dans celui-ci. Ce faisant, la tige (47) tire, via la chaîne (48), sur le bras de suspension (31), ce qui a pour effet de pivoter ledit bras (31) par rapport au châssis (15) et de faire monter le mécanisme de récolte (14).

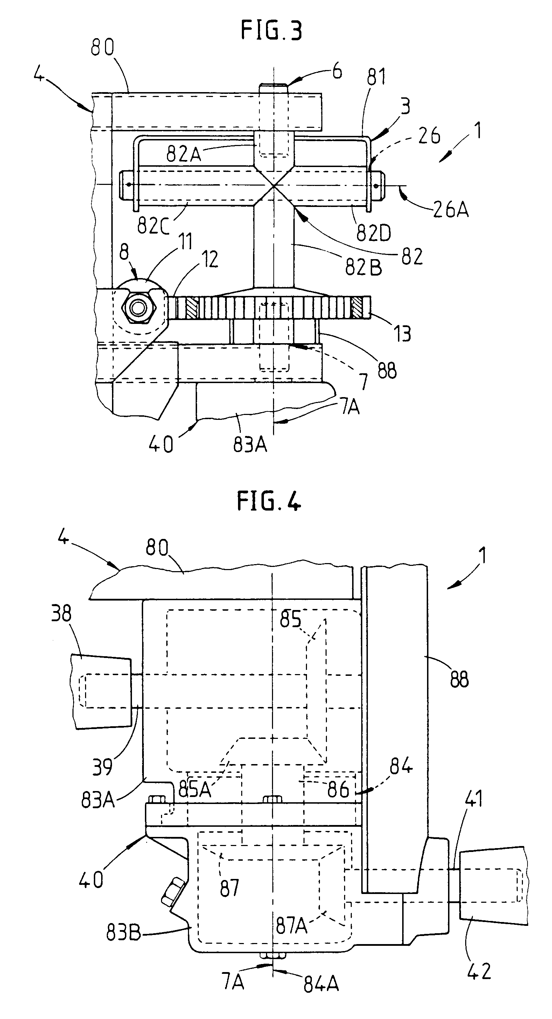

Le mécanisme de récolte (14) est entraîné à l'aide d'un dispositif de transmission de mouvement (40) qui apparaît sur la figure 4. Celui-ci s'étend sous la première chape (80) de la structure d'attelage (4) et comporte un carter supérieur (83A) et un carter inférieur (83B). Le carter supérieur (83A) est lié rigidement à la structure d'attelage (4) et contient un arbre d'entrée (39) dont l'axe de rotation s'étend au moins sensiblement parallèlement à l'axe de rotation de l'arbre prise de force (non représenté) du tracteur (2). Le carter inférieur (83B), quant à lui, contient un arbre de sortie (41) et est lié au carter supérieur (83A) au moyen d'une liaison pivot (84) d'axe géométrique (84A) confondu avec l'axe au moins sensiblement vertical (7A) du dispositif de liaison (6). De ce fait, le carter inférieur (83B) peut être pivoté par rapport au carter supérieur (83A) autour de l'axe au moins sensiblement vertical (7A) du dispositif de liaison (6) de sorte que l'axe de rotation de l'arbre de sortie (41) du carter inférieur (83B) s'étende toujours au moins sensiblement parallèlement à l'axe de rotation de l'arbre d'entrée (43) du carter d'entrée (30) du mécanisme de récolte (14). Pour ce faire, un organe d'orientation (88) lie en rotation la roue dentée (13) avec le carter inférieur (83B) (figure 2). Ainsi, la roue dentée (13) peut placer simultanément, sous l'action du vérin de manoeuvre (8), le corps (3) et, par l'intermédiaire de l'organe d'orientation (88), le carter inférieur (83B) dans la position angulaire désirée par pivotement autour de l'axe au moins sensiblement vertical (7A) du dispositif de liaison (6).

L'entraînement du mécanisme de récolte (14) est réalisé à partir de la prise de force du tracteur (2), qui attaque, par l'intermédiaire d'un arbre télescopique (38) à joints universels, l'arbre d'entrée (39) du carter supérieur (83A) du dispositif de transmission de mouvement (40) (figure 4). L'arbre d'entrée (39) entraîne, par l'intermédiaire d'un premier couple d'engrenages coniques (85, 85A), un arbre intermédiaire (86) dont l'axe de rotation est confondu avec l'axe au moins sensiblement vertical (7A) du dispositif de liaison (6) et qui entraîne, par l'intermédiaire d'un deuxième couple d'engrenages coniques (87, 87A), l'arbre de sortie (41) du carter inférieur (83B). Ce dernier entraîne, par l'intermédiaire d'un autre arbre télescopique (42) à joints universels, l'arbre d'entrée (43) du carter d'entrée (30) du mécanisme de récolte (14). Afin de réduire l'angle de fonctionnement des joints universels de cet arbre télescopique (42), l'arbre de sortie (41) du carter inférieur (83B) s'étend, en travail normal, au moins sensiblement au même niveau que l'arbre d'entrée (43) du carter d'entrée (30) du mécanisme de récolte (14).

Finalement, différentes modifications restent possibles, notamment en ce qui concerne la constitution des divers éléments ou par substitution d'équivalents techniques, sans pour autant sortir du domaine de protection défini dans les revendications.

## Revendications

1. Machine agricole (1) comportant une structure d'attelage (4) destinée à être liée à l'attelage trois points (5) d'un véhicule moteur (2) et un corps (3) lié à cette structure d'attelage (4) à l'aide d'une première articulation (7) d'axe (7A) dirigé vers le haut, le pivotement du corps (3) autour dudit axe (7A) étant verrouillé au travail, ledit corps (3) qui s'appuie sur le sol à l'aide d'un support (16), comporte au moins un organe de travail (24, 29) entraîné au moyen d'un dispositif de transmission de mouvement (40) qui comprend :
- un premier carter (83A) lié rigidement à la structure d'attelage (4) et comportant un arbre d'entrée (39) et un premier couple d'engrenages coniques (85, 85A),
- un deuxième carter (83B) lié en rotation avec le corps (3) et comportant un arbre de sortie (41) s'étendant en direction du corps (3) et un deuxième couple d'engrenages coniques (87, 87A),
et
- un arbre intermédiaire (86) dont l'axe de rotation est confondu avec l'axe (7A) de la première articulation (7) et qui transmet le mouvement du premier carter (83A) au deuxième carter (83B),
caractérisée en ce que le support (16) à l'aide duquel le corps (3) s'appuie sur le sol, comporte une roue (16) susceptible de pivoter durant le travail autour d'un axe (20A) au moins sensiblement vertical, ce pivotement étant verrouillé pendant le transport, que dans le voisinage de la première articulation (7) le corps (3) est lié à la structure d'attelage (4) à l'aide d'une deuxième articulation (26) prévue entre le corps (3) et la première articulation (7) et d'axe (26A) au moins sensiblement perpendiculaire à l'axe (7A) de cette dernière et à l'axe longitudinal dudit corps (3), et qu'un arbre télescopique à joints universels (42) transmet le mouvement de rotation de l'arbre de sortie (41) du deuxième carter (83B) à l'arbre d'entrée (43) d'un carter d'entrée (30) lié au corps (3).

2. Machine agricole selon la revendication 1, caractérisée en ce que la première articulation (7) et la deuxième articulation (26) sont formées par un croisillon (82) guidé d'une part dans une chape (80) de la structure d'attelage (4) et d'autre part dans une chape (81) du corps (3).

3. Machine agricole selon la revendication 1 ou 2, caractérisée en ce que l'axe (7A) de la première articulation (7) et l'axe (26A) de la deuxième articulation (26) sont concourants.

4. Machine agricole selon une ou plusieurs des revendications 1 à 3, caractérisée en ce que l'axe (7A) de la première articulation (7) et l'axe (26A) de la deuxième articulation (26) s'étendent dans le voisinage du plan de symétrie vertical de la structure d'attelage (4) dirigé suivant la direction d'avance (23 ou 23A).

5. Machine agricole selon une ou plusieurs des revendications 1 à 4, caractérisée en ce que le pivotement du corps (3) autour de l'axe (7A) de la première articulation (7) pour amener le corps (3) au moins dans la position de travail, est réalisé sous l'action d'un organe de manoeuvre (8).

6. Machine agricole selon la revendication 5, caractérisée en ce que l'organe de manoeuvre (8) est un vérin à double tige (9, 9A) ou équivalent.

7. Machine agricole selon la revendication 6, caractérisée en ce que la double tige (9, 9A) du vérin de manoeuvre (8) est liée, à ses extrémités s'étendant au-dehors du cylindre (11) dudit vérin de manoeuvre (8), à la structure d'attelage (4) et que ledit cylindre (11) est en liaison d'entraînement avec le corps (3).

8. Machine agricole selon la revendication 7, caractérisée en ce que la liaison d'entraînement entre ledit cylindre (11) et le corps (3) est réalisée au moyen d'une crémaillère (12) liée audit cylindre (11) et engrénant avec un secteur circulaire denté (13) lié directement ou indirectement en rotation avec le corps (3) et centré sur l'axe (7A) de la première articulation (7).

9. Machine agricole selon les revendications 2 et 8, caractérisée en ce que le secteur circulaire denté (13) est lié en rotation avec l'une (82B) des branches (82A, 82B) du croisillon (82), qui forme une partie de la première articulation (7).

10. Machine agricole selon une ou plusieurs des revendications 5 à 9, caractérisée en ce que l'organe de manoeuvre (8) est un vérin hydraulique.

11. Machine agricole selon une ou plusieurs des revendications 1 à 10, caractérisée en ce que l'arbre de sortie (41) du deuxième carter (83B) s'étend au moins sensiblement parallèlement à l'arbre d'entrée (43) du carter d'entrée (30) du corps (3).

12. Machine agricole selon la revendication 11, caractérisée en ce que l'arbre de sortie (41) du deuxième carter (83B) s'étend au moins sensiblement au même niveau que l'arbre d'entrée (43) du carter d'entrée (30) du corps (3).

13. Machine agricole selon une ou plusieurs des revendications 1 à 12, caractérisée en ce que le deuxième carter (83B) est lié au premier carter (83A) au moyen d'une articulation cylindrique (84) dont l'axe (84A) est confondu avec l'axe (7A) de la première articulation (7).

14. Machine agricole selon une ou plusieurs des revendications 1 à 13, caractérisée en ce que le deuxième carter (83B) est implanté sous le premier carter (83A).

15. Machine agricole selon un ou plusieurs des revendications 1 à 14, caractérisée en ce que la rotation du deuxième carter (83B) est pilotée par un organe d'orientation (88) lié directement ou indirectement au corps (3).

16. Machine agricole selon les revendications 8 et 15, caractérisée en ce que l'organe d'orientation (88) lie en rotation le secteur circulaire denté (13) et le deuxième carter (83B).

17. Machine agricole selon une ou plusieurs des revendications 1 à 16, caractérisée en ce que la roue (16) est implantée à l'extrémité du corps (3) éloignée de la structure d'attelage (4).

18. Machine agricole selon une ou plusieurs des revendications 1 à 17, caractérisée en ce que, dans la position de transport, la roue (16) est au moins sensiblement alignée avec le centre de gravité du corps (3) et l'axe (7A) de la première articulation (7).

19. Machine agricole selon une ou plusieurs des revendications 1 à 18, caractérisée en ce que le corps (3) comporte un châssis (15) qui s'appuie sur le sol au moyen de la roue (16), et que ledit (lesdits) organe(s) de travail (24, 29) est (sont) lié(s) audit châssis (15) de sorte à pouvoir se déplacer en hauteur par rapport audit châssis (15).

20. Machine agricole selon une ou plusieurs des revendications 1 à 19, caractérisée en ce que ledit (lesdits) organe(s) de travail (24, 29) comporte(nt) des organes de coupe (24).

21. Machine agricole selon la revendication 20, caractérisée en ce que ledit (lesdits) organe(s) de travail (24, 29) comporte(nt) des organes de traitement (29) du produit coupé.

## Claims

1. An agricultural machine (1) having a hitching structure (4) intended to be connected to the three point hitching (5) of a motor vehicle (2) and a body (3) connected to this hitching structure (4) by means of a first articulation (7) whose axis (7A) is upwardly directed, the pivoting of the body (3) about the said axis (7A) being locked during work, the said body (3) which rests on the ground by means of a support (16), comprises at least one working element (24, 29) driven by means of a movement transmission device (40) which has :
- a first housing (83A) rigidly connected to the hitching structure (4) and having an entry shaft (39) and a first pair of bevel gears (85, 85A),
- a second housing (83B) connected in rotation with the body (3) and having an exit shaft (41) extending in the direction of the body (3) and a second pair of bevel gears (87, 87A),
and
- an intermediary shaft (86) whose axis of rotation is coincident with the axis (7A) of the first articulation (7) and which transmits the movement from the first housing (83A) to the second housing (83B),
characterised in that the support (16) by means of which the body (3) rests on the ground, has a wheel (16) able to pivot during work about an at least approximately vertical axis (20A), this pivoting being locked during transport, in that in the vicinity of the first articulation (7) the body (3) is connected to the hitching structure (4) by means of a second articulation (26) provided between the body (3) and the first articulation (7) and having an axis (26A) at least approximately perpendicular to the axis (7A) of the said first articulation (7) and to the longitudinal axis of the said body (3), and in that a telescopic shaft (42) with universal joints transmits the rotational movement from the exit shaft (41) of the second housing (83B) to the entry shaft (43) of an entry housing (30) connected to the body (3).

2. An agricultural machine in accordance with claim 1, characterised in that the first articulation (7) and the second articulation (26) are formed by a crosspiece (82) guided on the one hand in a connecting bracket (80) of the hitching structure (4) and on the other hand in a connecting bracket (81) of the body (3).

3. An agricultural machine in accordance with claim 1 or 2, characterised in that the axis (7A) of the first articulation (7) and the axis (26A) of the second articulation (26) are concurrent.

4. An agricultural machine in accordance with one or more of claims 1 to 3, characterised in that the axis (7A) of the first articulation (7) and the axis (26A) of the second articulation (26) extend in the vicinity of the vertical symmetry plane of the hitching structure (4) directed along the direction of advance (23 or 23A).

5. An agricultural machine in accordance with one more of claims 1 to 4, characterised in that the pivoting of the body (3) about the axis (7A) of the first articulation (7) in order to bring the body (3) at least into the working position is achieved by the action of a manoeuvring element (8).

6. An agricultural machine in accordance with claim 5, characterised in that the manoeuvring element (8) is a jack with two rods (9, 9A) or the equivalent.

7. An agricultural machine in accordance with claim 6, characterised in that the double rod (9, 9A) of the manoeuvring jack (8) is connected, at its ends extending beyond the cylinder (11) of the said manoeuvring jack (8) to the hitching structure (4) and in that the said cylinder (11) is in driving connection with the body (3).

8. An agricultural machine in accordance with claim 7, characterised in that the driving connection between the said cylinder (11) ant the body (3) is achieved by means of a rack (12) connected to the said cylinder (11) and engaging with a toothed circular sector (13) connected directly or indirectly in rotation with the body (3) and centred on the axis (7A) of the first articulation (7).

9. An agricultural machine in accordance with claims 2 and 8, characterised in that the toothed circular sector (13) is connected in rotation with one (82B) of the branches (82A, 82B) of the crosspiece (82), which forms a part of the first articulation (7).

10. An agricultural machine in accordance with one or more of claims 5 to 9, characterised in that the manoeuvring element (8) is an hydraulic jack.

11. An agricultural machine in accordance with one or more of claims 1 to 10, characterised in that the exit shaft (41) of the second housing (83B) extends at least approximately parallel to the entry shaft (43) of the entry housing (30) of the body (3).

12. An agricultural machine in accordance with claim 11, characterised in that the exit shaft (41) of the second housing (83B) extends at least approximately at the same level as the entry shaft (43) of the entry housing (30) of the body (3).

13. An agricultural machine in accordance with one or more of claims 1 to 12, characterised in that the second housing (83B) is connected to the first housing (83A) by means of a cylindrical articulation (84) whose axis (84A) is coincident with the axis (7A) of the first articulation (7).

14. An agricultural machine in accordance with one or more of claims 1 to 13, characterised in that the second housing (83B) is located under the first housing (83A).

15. An agricultural machine in accordance with one or more of claims 1 to 14, characterised in that the rotation of the second housing (83B) is driven by a positioning element (88) directly or indirectly connected to the body (3).

16. An agricultural machine in accordance with claims 8 and 15, characterised in that the positioning element (88) connects the toothed circular sector (13) and the second housing (83B) in rotation.

17. An agricultural machine in accordance with one or more of claims 1 to 16, characterised in that the wheel (16) is located at the end of the body (3) furthest from the hitching structure (4).

18. An agricultural machine in accordance with one or more of claims 1 to 17, characterised in that, in the transport position, the wheel (16) is at least approximately aligned with the centre of gravity of the body (3) and the axis (7A) of the first articulation (7).

19. An agricultural machine in accordance with one or more of claims 1 to 18, characterised in that the body (3) has a frame (15) which rests on the ground by means of the wheel (16), and in that the said working element(s) (24, 29) is (are) connected to the said frame (15) in such a way as to be able to move in height in relation to the said frame (15).

20. An agricultural machine in accordance with one or more of claims 1 to 19, characterised in that the said working element(s) (24, 29) comprises (comprise) cutter members (24).

21. An agricultural machine in accordance with claim 20, characterised in that the said working element(s) (24, 29) comprises (comprise) elements (29) for the treatment of the cut product.

## Patentansprüche

1. Landmaschine (1) mit einer Kupplungseinrichtung (4), die zur Verbindung mit einer Dreipunktkupplung (5) eines Motorfahrzeuges (2) bestimmt ist, und einem Körper (3), der mit dieser Kupplungseinrichtung (4) mittels eines ersten Gelenks (7) mit nach oben gerichteter Achse (7A) verbunden ist, wobei die Verschwenkung des Körpers (3) um die Achse (7A) im Betrieb blockiert ist, welcher Körper (3) , der sich am Boden mittels einer Stutze (16) abstutzt, mindestens ein Arbeitsorgan (24, 29) aufweist, das mittels einer Bewegungsübertragungsvorrichtung (40) angetrieben wird, die :
- ein erstes Gehäuse (83A), das fest mit der Kupplungseinrichtung (4) verbunden ist und eine Eingangswelle (39) und ein erstes Paar von Kegelrädern (85, 85A) aufweist,
- ein zweites Gehäuse (83B), das drehfest mit dem Körper (3) verbunden ist und eine Ausgangswelle (41), die sich in Richtung des Körpers (3) erstreckt, und ein zweites Paar von Kegelrädern (87, 87A) aufweist,
und
- eine Zwischenwelle (86), deren Drehachse mit der Achse (7A) des ersten Gelenks (7) zusammenfällt und die die Bewegung des ersten Gehäuses (83A) auf das zweite Gehäuse (83B) überträgt,
umfasst,
dadurch gekennzeichnet, dass die Stütze (16), mittels welcher sich der Körper (3) auf dem Boden abstutzt, ein Rad (16) aufweist, das im Betrieb um eine zumindest im wesentlichen vertikale Achse (20A) drehen kann, wobei das Verdrehen beim Transport blockiert ist, dass in der Nähe des ersten Gelenks (7) der Körper (3) mit der Kupplungseinrichtung (4) mittels eines zweiten Gelenks (26) mit einer zumindest im wesentlichen zur Achse (7A) des ersten Gelenkes (7) und zur Längsachse des Körpers (3) senkrechten Achse (26A) verbunden ist, welches zweite Gelenk (26) zwischen dem Körper (3) und dem ersten Gelenk (7) vorgesehen ist, und dass eine teleskopische Kardangelenkwelle (42) die Drehbewegung der Ausganswelle (41) des zweiten Gehäuses (83B) auf die Eingangswelle (43) eines Eingangsgehäuses (30), das mit dem Körper (3) verbunden ist, überträgt.

2. Landmaschine nach Anspruch 1, dadurch gekennzeichnet, dass das erste Gelenk (7) und das zweite Gelenk (26) durch einen Kreuzzapfen (82) gebildet werden, der einerseits in einem Gabelgelenkstück (80) der Kupplungseinrichtung (4) und anderseits in einem Gabelgelenkstück (81) des Körpers (3) geführt ist.

3. Landmaschine nach Anspruch 1 oder 2, dadurch gekennzeichnet, dass die Achse (7A) des ersten Gelenks (7) und die Achse (26A) des zweiten Gelenks (26) in einem Punkt zusammenlaufen.

4. Landmaschine nach einem oder mehreren der Ansprüche 1 bis 3, dadurch gekennzeichnet, dass die Achse (7A) des ersten Gelenks (7) und die Achse (26A) des zweiten Gelenks (26) sich in der Nähe der vertikalen, in Vorschubrichtung (23, 23A) ausgerichteten Symmetrieebene der Kupplungseinrichtung (4) erstrecken.

5. Landmaschine nach einem oder mehreren der Ansprüche 1 bis 4, dadurch gekennzeichnet, dass die Verschwenkung des Körpers (3) um die Achse (7A) des ersten Gelenks (7), um den Körper (3) zumindest in die Betriebsstellung zu bringen, unter der Wirkung eines Betätigungsorgans (8) erfolgt.

6. Landmaschine nach Anspruch 5, dadurch gekennzeichnet, dass das Betätigungsorgan (8) ein Zylinder mit Doppelstange (9, 9A) oder dgl. ist.

7. Landmaschine nach Anspruch 6, dadurch gekennzeichnet, dass die Doppelstange (9, 9A) des Betätigungszylinders (8) an ihren Enden, die sich ausserhalb des Zylinders (11) des Betätigungszylinders (8) erstrecken, mit der Kupplungseinrichtung (4) verbunden ist und dass der Zylinder (11) in Antriebsverbindung mit dem Körper (3) steht.

8. Landmaschine nach Anspruch 7, dadurch gekennzeichnet, dass die Anstriebsverbindung zwischen dem Zylinder (11) und dem Körper (3) mittels einer Zahnstange (12) erfolgt, die mit dem Zylinder (11) verbunden ist und mit einem Zahnbogensegment (13) kämmt, das direkt oder indirekt drehfest mit dem Körper (3) verbunden und auf der Achse (7A) des ersten Gelenks (7) zentriert ist.

9. Landsmaschine nach den Ansprüchen 2 und 8, dadurch gekennzeichnet, dass Zahnbogensegment (13) drehfest mit dem einen (82B) der Schenkel (82A, 82B) des Kreuzzapfens (82), der einen Teil des ersten Gelenks (7) bildet, verbunden ist.

10. Landmaschine nach einem oder mehreren der Ansprüche 5 bis 9, dadurch gekennzeichnet, dass das Betätigungsorgan (8) ein Hydraulikzylinder ist.

11. Landmaschine nach einem oder mehreren der Ansprüche 1 bis 10, dadurch gekennzeichnet, dass die Ausganswelle (41) des zweiten Gehäuses (83B) sich zumindest im wesentlichen parallel zur Einganswelle (43) des Eingangsgehäuses (30) des Körpers (3) erstreckt.

12. Landmaschine nach Anspruch 11, dadurch gekennzeichnet, dass die Ausgangswelle (41) des zweiten Gehäuses (83B) sich zumindest im wesentlichen in gleicher Höhe wie die Eingangswelle (43) des Eingangsgehäuses (30) des Körpers (3) erstreckt.

13. Landmaschine nach einem oder mehreren der Ansprüche 1 bis 12, dadurch gekennzeichnet, dass das zweite Gehäuse (83B) mit dem ersten Gehäuse (83A) mittels eines Zylindergelenks (84) verbunden ist, dessen Achse (84A) mit der Achse (7A) des ersten Gelenks (7) zusammenfällt.

14. Landmaschine nach einem oder mehreren der Ansprüche 1 bis 13, dadurch gekennzeichnet, dass das zweite Gehäuse (83B) unter dem ersten Gehäuse (83A) angeordnet ist.

15. Landmaschine nach einem oder mehreren der Ansprüche 1 bis 14, dadurch gekennzeichnet, dass die Rotation des zweiten Gehäuses (83B) durch ein Orientierungsorgan (88), das direkt oder indirekt mit dem Körper (3) verbunden ist, gesteuert wird.

16. Landmaschine nach den Ansprüchen 8 und 15, dadurch gekennzeichnet, dass das Orientierungsorgan (88) das Zahnbogensegment (13) und das zweite Gehäuse (83B) drehfest verbindet.

17. Landmaschine nach einem oder mehreren der Ansprüche 1 bis 16, dadurch gekennzeichnet, dass das Rad (16) am von der Kupplungseinrichtung (4) entfernten Ende des Körpers (3) angeordnet ist.

18. Landmaschine nach einem oder mehreren der Ansprüche 1 bis 17, dadurch gekennzeichnet, dass in der Transportstellung das Rad (16) zumindest im wesentlichen mit dem Schwerpunkt des Körpers (3) und der Achse (7A) des ersten Gelenks (7) fluchtend ausgerichtet ist.

19. Landmaschine nach einem oder mehreren der Ansprüche 1 bis 18, dadurch gekennzeichnet, dass der Körper (3) einen Rahmen (15) aufweist, der sich auf dem Boden mittels des Rades (16) abstutzt, und dass das (die) Arbeitsorgan(e) (24, 29) mit dem Rahmen (15) derart verbunden ist (sind), dass es (sie) sich in Bezug auf den Rahmen (15) der Höhe nach bewegen kann (können).

20. Landmaschine nach einem oder mehreren der Ansprüche 1 bis 19, dadurch gekennzeichnet, dass (die) Arbeitsorgan(e) (24, 29) Schneidorgane (24) umfasst (umfassen).

21. Landmaschine nach Anspruch 20, dadurch gekennzeichnet, dass das (die) Arbeitsorgan(e) (24, 29) Organe (29) zur Behandlung des geschnittenen Gutes umfasst (umfassen).
